# EUROPÄISCHE PATENTSCHRIFT

(11) **EP 0 618 544 B1**
(45) Veröffentlichungstag und Bekanntmachung des Hinweises auf die Patenterteilung: **18.08.1999**
(21) Anmeldenummer: 93110288.3
(22) Anmeldetag: 28.06.1993
(51) Int. Cl.: G06K 9/03

(54) **Verfahren und Vorrichtung zum automatischen Erfassen und Erkennen von Schriften**
Method and apparatus for automatically acquiring and recognizing writings
Méthode et appareil pour acquérir et reconnaître automatiquement des écritures

(30) Priorität: 29.03.1993 DE 4310128
(43) Veröffentlichungstag der Anmeldung: 05.10.1994
(73) Patentinhaber: Kleindienst Datentechnik GmbH & Co. KG, D-86165 Augsburg (DE)
(72) Erfinder: Kunzmann, Hubert, D-8912 Kaufering (DE)
(74) Vertreter: Herrmann-Trentepohl, Werner, Dipl.-Ing.

(56) Entgegenhaltungen:
- FR-A- 2 085 133
- US-A- 31 692
- NACHRICHTEN ELEKTRONIK Bd. 35, Nr. 4 , 1981 , HEIDELBERG DE Seite 164-5 J. SCHÜRMANN 'Maschinelles Erkennen von Schriftzeichen'
- IBM TECHNICAL DISCLOSURE BULLETIN Bd. 35, Nr. 1B , Juni 1992 , NEW YORK NY Seite 22-4 'amount recognition system'
- SYSTEMS & COMPUTERS IN JAPAN. Bd. 23, Nr. 5 , 1992 , NEW YORK NY Seiten 357 - 65 T KAWATANIT ET AL 'Shape quantification of handprinted numerals using recognition results and its application'

## Beschreibung

Die Erfindung betrifft ein Verfahren sowie eine Vorrichtung zum automatischen Erfassen und Erkennen von Schriften unter Verwendung von Lesevorrichtungen, insbesondere zur Erfassung und Erkennung von Belegen und Formularen mit handschriftlichen Eintragungen und/oder Maschinenschriften.

Es ist bekannt, zur Erfassung und Erkennung der Daten von Belegen der oben genannten Art, (z.B. Zahlungsverkehrsbelegen) automatisch arbeitende Lese- und Bearbeitungssysteme einzusetzen. Im Zahlungsverkehr werden hierzu sogenannte Belegleser eingesetzt, die in Computernetzwerke integriert sind. Kameras, Elektronik und geeignete Computerprogramme ermöglichen eine Erfassung, Interpretation, soweit erforderlich eine manuelle Korrektur, Abstimmung, Differenzbeseitigung, Kontrolle und Weitergabe von gelesenen Daten, Sortierung und dgl. Das softwaregesteuerte System kann während der Einlesephase mittels des klassischen OCR-Systems (Optical Character Recognition System) die Belege steuern, verfilmen, indossieren und gleichzeitig um Blindfarben bereinigte digitale Abbildungen der Belege in Echtzeit herstellen. Eine Digitalisierungskamera nimmt mit der Geschwindigkeit des Beleglesers (10.000, 20.000, 40.000 oder 60.000 Belege/h) das digitale Abbild der Überweisungsbelege mit sehr hoher Auflösung, wie für Schriftenlesung erforderlich, auf.

Ab einer Betragsgrenze von DM 500,- werden in der Bundesrepublik Deutschland für Überweisungen die orangenen Vordrucke verwendet. Diese enthalten die vollständigen Auftraggeberund Empfänger-Informationen, vollständige Bezeichnung der Kreditinstitute, den Betrag und den Verwendungszweck. Ein Beleg kann mit unterschiedlichen Maschinenschriften und Handblockschrift gleichzeitig ausgefüllt sein. In allen Feldern zusammengenommen sind bis zu 250 Zeichen pro Beleg enthalten. Von diesen Belegen werden täglich einige Millionen verarbeitet. Der Vorteil für die Kreditinstitute besteht u.a. darin, daß die Gutschrift für den Empfänger nicht an mehreren Stellen wiederholt bearbeitet werden muß, solange bis der Beleg an dem kontoführenden Institut angelangt ist, sondern daß der erfaßte Datensatz elektronisch übermittelt werden kann.

Bei der Erfassung von Belegen, bei denen bestimmte Angaben mit Maschinenschriften und/oder handschriftlich erstellt sind, ergeben sich dadurch Schwierigkeiten, daß einerseits die einzelnen Buchstaben und Ziffern nicht in die dafür vorgesehenen Lesefelder einzeln eingetragen werden und andererseits dadurch, daß Handschriften sehr unterschiedlich und zum Teil kaum leserlich sind. Dies führt dazu, daß bei Universalschriftbelegen weitaus mehr Korrigierarbeit als bei der Verarbeitung der in Normschrift abgefaßten Daten einer Codierzeile von Belegen (z.B. Scheck) durchzuführen ist.

Es sind zahlreiche Lesegeräte auf dem Markt, welche universelle Leseprogramme für die Erkennung von Mischschriften wie z.B. Maschinenschrift, Handblockschrift, rein numerische oder alphanumerische Schrift oder bestimmte Handschrift-Einzelschreibweisen aufweisen. Dabei ist es nicht auszuschließen, daß schlecht geschriebene Belege in Teilen entweder nicht oder falsch gelesen werden. Wenn das Lesegerät Zeichen nicht erkennt, wird der Beleg einer Bearbeitungsstation zugewiesen, an welcher eine Person eine entsprechende Korrektur eingibt. Erkennt es ein schlecht geschriebenes Schriftzeichen fälschlicherweise als ein anderes Zeichen und bemerkt deshalb keinen Fehler, erfolgt bei einer derartigen unerkannten Falschlesung (Substitution) eine falsche Buchung.

Die personelle Korrekturmethode ist sehr arbeits- und kostenintensiv und erfordert sehr viel Personal. Bei dem Einsatz der bisherigen Lesegeräte muß bei Lifematerial von einer Rate der nicht erkannten Zeichen (Rejectrate) und Substitutionen (falsch erkannte Zeichen) von mehreren Prozent, bei schlechtem Material entsprechend höheren Prozentsätzen, ausgegangen werden. Dieser Wert kann, abhängig von der Art der eingelesenen Belegdaten, auch höher sein. In jedem Fall ist jedoch ein hoher Aufwand an anschließender Korrektur, Abstimmung und Kontrolle durch den Menschen notwendig. Trotz einiger selbstverbessernder Software-Funktionen bleibt bei den genannten Belegmengen ein enormer manueller Aufwand an den Korrektur-Workstations vorhanden. Bundesweit sind hierfür einige tausend Personen an den Systemen tätig.

Wenn man davon ausgeht, daß beispielsweise in einem Kreditinstitut mittlerer Größe täglich bis zu 20.000 Belege mit handschriftlichen Eintragungen verarbeitet werden müssen, dann ergibt sich bei einer Rejectrate von 10% bereits ein Belegkorrekturaufwand von 10 bis 20 Zeichen pro Beleg. Da eine manuelle Vollerfassung noch mehr Arbeitskräfte erfordern würde, ist nur eine maschinelle Erfassung mit entsprechender Korrektur durch das Personal sinnvoll.

US-A-31 692 beinhaltet einen kombinierten magnetischen optischen Zeichenleser/Lesereinrichtung, welche in ihrem System und ihrem Verfahren zur Aufzeichnung von Informationen, sowohl magnetisch als auch optisch beschrieben wird. Dabei werden sehr wohl zwei verschiedene Abtastsysteme, nämlich ein optisches und ein magnetisches Abtastsystem, verwendet, die dazu dienen, in Realzeit Code-Line-Informationen aufzuzeichnen, welche in der vorliegenden Druckschrift als "Recognition" bezeichnet werden. Es ist bei Betrachtung dieser Druckschrift zu berücksichtigen, daß der Inhalt dieser Druckschrift auf einen "Reader" gerichtet ist, also auf einen Leser, mit dessen Hilfe eine direkte Code-Line-Lesererkennung stattfindet, jedoch nicht auf ein Verfahren zum Erkennen von Schriften, zwar unter Verwendung von Lesevorrichtungen, jedoch in welchem ein elektronisches Abbild durch zwei Schrifterkennungsverfahren unterschiedlicher Art interpretiert wird.

Der Erfindung liegt daher die Aufgabe zugrunde, ein Verfahren der gattungsgemäßen Art vorzuschlagen, durch welches eine gravierende Erkennungsverbesserung der eingelesenen Belegdater erzielt und ferner die Vermeidung von Substitutionsbuchungen optimiert werden, um damit das System wirtschaftlicher und sicherer zu machen. Gleichzeitig sollen der erforderliche Aufwand an Hard- und Software gegenüber herkömmlichen Lesesystemen nicht wesentlich erhöht und der beschriebene Korrekturaufwand verringert werden.

Diese Aufgabe der Erfindung wird in vorteilhafter Weise dadurch gelöst, daß das elektronische Abbild jedes Beleges durch wenigstens zwei Schrifterkennungsverfahren unterschiedlicher Art interpretiert wird und daß an unterschiedlichen Stellen nicht erkannte Zeichen durch erkannte Zeichen des bzw. der jeweils anderen Verfahren ersetzt werden. Durch diese Maßnahme kann die Erkennungsqualität des Systems erheblich gesteigert werden, da die von einem Leser nicht erkannten Zeichen von einem anderen Leser als gut erkannt werden. Die Rejectrate wird also wesentlich verringert und damit der erforderliche personelle Korrekturaufwand.

Da darüberhinaus das elektronische Abbild jedes Beleges parallel oder nacheinander wenigstens zwei Schrifterkennungsverfahren unterschiedlicher Art durchläuft und ein Vergleich zwischen den erfaßten Daten der eingesetzten Schrifterkennungsverfahren durchgeführt wird, werden Substitutionen, bei denen ein Leser tatsächlich falsche Daten als "richtig" erkannt weitergibt, nahezu vermieden. Bei der Feststellung einer Erkennungsdiskrepanz wird eine Überprüfung erzwungen. Dabei werden in vorteilhafter Weise universelle Schriftleseverfahren eingesetzt, wobei die einzelnen Erkennungsverfahren derart aufeinander abgestimmt werden, daß sie jeweils für die Erkennung einer unterschiedlichen Schriftart optimiert sind.

Das bedeutet, daß beispielsweise ein Lesegeärt, welches für eine bestimmte Schreibschriftart eine optimale Erkennungsweise besitzt, dagegen für andere Schriften eine nicht so gute Erkennungsweise, mit einem anderen Lesegerät in Kombination arbeitet, welches wiederum für eine andere Schreibschriftart oder gerade für spezielle Buchstaben oder Zahlen optimal arbeitet, die von dem ersten Lesegerät nicht optimal erkannt werden. Wenn nun das elektronische Abbild eines Beleges an beiden Geräten interpretiert wird, dann wird auf jeden Fall durch die Kombination beider Geräte die Erkennungsqualität der Belegdaten erhöht und damit die Anzahl der Fehlbuchungen bzw. bei einer automatischen Korrektur die Anzahl der erforderlichen Korrekturen durch Personal reduziert. Es kann gemäß der Erfindung auch in vorteilhafter Weise vorgesehen sein, daß die Erkennungsverfahren für einzelne Bereiche innerhalb unterschiedlicher Schriftarten optimiert sind, so daß man Lesesysteme zusammenstellen kann, die besonders gut für die Erkennung von handschriftlichen Eintragungen geeignet sind. Die besondere Gefahr bei dem Einsatz von nur einem Lesegerät besteht gerade darin, daß das Gerät etwas als "richtig" erkennt, was tatsächlich falsch ist, so daß der "richtig" erkannte Datensatz zu einer Fehlbuchung führt.

Um den Fall möglichst auszuschließen, daß beide Lesegeräte an der gleichen Stelle ein Zeichen substituieren und es infolgedessen zu einer Fehlbuchung kommt, kann in vorteilhafter Weise vorgesehen sein, daß die Anzahl der von dem elektronischen Abbild des Beleges durchlaufenen Schrifterkennungsverfahren unterschiedlicher Art, auf die Problemfälle spezialisiert, erhöht wird.

Wird nun aufgrund eines Schrifterkennungsverfahrens gegenüber einem anderen Erkennungsverfahren eine Erkennungsdiskrepanz festgestellt, dann wird automatisch eine Überprüfung des Beleges erzwungen. D. h., daß die Belegdaten einer nachgeschalteten Station zugeleitet werden, an welcher eine Überprüfung der Belegdaten auf den vermeintlichen Fehler hin erfolgt.

Die Korrektur kann automatisch maschinell oder in herkömmlicher Weise manuell durch eine Bearbeitungsperson erfolgen.

Ein Abgleich kann entweder mit Hilfe von Algorithmen - wie ein numerisches Zeichen zwischen zwei Alphazeichen gegenüber Alpha in Alpha - oder über ein Wörterbuch oder durch bekannte Abhängigkeiten von z.B. Bankleitzahl zu Institutsbezeichnungen oder dgl. erfolgen. Erkennt beispielsweise ein Lesegerät bei dem handgeschriebenen Namen "Hubert" den Buchstaben b als die Ziffer 6 und ein anderes Lesegerät den Namen "Hubert" richtig, dann führt dieser Abgleich zu einer automatischen Richtigstellung, indem Alpha zwischen zwei Alpha als wahrscheinlicher angenommen wird, oder über einen Wörterbuchvergleich oder dgl. richtiggestellt und der weiteren Datenverarbeitung zugeleitet wird. Bei rein numerischen Feldern ist das Problem schwieriger zu lösen, so daß es hier gegebenenfalls der Korrektur durch eine Bearbeitungsperson bedarf. Wenn in einem rein numerischen Feld z.B. die Zahl 1 wie eine Zahl 7 ohne Querstrich geschrieben wird, dann kann bei der Erkennung einer 1 durch das eine Lesegerät und der Erkennung einer 7 durch das andere Lesegerät entsprechend reagiert werden. Auf jeden Fall wird eine Substitutionsbuchung vermieden, da erkannt wurde, daß eine Diskrepanz bei der Ziffer vorliegt.

In vorteilhafter Weise ist es auch denkbar, daß der Datenabgleich aufgrund der auf dem Beleg enthaltenen Daten selbst erfolgt. So ist es beispielsweise denkbar, daß der Beleg eine Handschrift-Buchstaben- und/oder Ziffernfolge aufweist, bei der der Rechner einen Vergleich zwischen der charakteristischen Handschrift und den vorgegebenen Buchstaben und/oder Ziffern durchführen kann. Aufgrund der erheblichen Speichermöglichkeiten von Daten ist es auch denkbar, daß eine bestimmte Buchstaben- oder Zifferngruppierung eines bestimmten Kunden der Bank hinterlegt wird und daß der Rechner bei einem von dem gleichen Kunden ausgestellten Beleg einen Zeichenabgleich zwischen den hinterlegten und den im Beleg eingetragenen Zeichen durchführt.

Wenn beispielsweise aus der Berücksichtigung von individuellen Schreibweisen eine Person immer eine Sechs wie eine Null schreibt, dann wäre ein Vergleich durch den Rechner beispielsweise folgendermaßen herzustellen. Bei der Überprüfung der von der Person beschriebenen Bankleitzahl erkennt der Rechner die gleiche Null, stellt aber anhand eines Vergleichs der Adresse der Bank fest, daß die Null eine Sechs sein müßte. Der Rechner schließt darauf zurück, daß der Kunde im Betragsfeld die gleiche Ziffer Null eingetragen hat, die aufgrund des Vergleichs mit der Bankleitzahl eine Sechs sein könnte, so daß hier eine Prüfung im Betragsfeld erzwungen wird. Auf diese Art und Weise kann man noch weitere Datensätze als überprüfungsbedürftig erkennen, oder - falls dies von der Revision des Kreditinstitutes zugelassen wird - automatisch fehlerfrei stellen.

Wie sich aus vorstehenden Ausführungen ergibt, wird die Erkennungsqualität des Lesesystems wesentlich erhöht, indem Belegdaten durch die kombinatorische Arbeitsweise von wenigstens zwei Erkennungseinheiten unterschiedlicher Verfahren als richtig erfaßt werden können, während sie durch einen Leser herkömmlicher Art wegen der Nichtinterpretation einzelner Belegdaten zurückgewiesen wurden. Auch werden die Substitutionsbuchungen erheblich herabgesetzt.

Ein erster Test mit tausend Belegen hat schon bei zwei unterschiedlichen Erkennungsverfahren mit intelligentem Abgleichsprogramm über beide Interpretationsergebnisse eine Verbesserung von ca. 70% gegenüber den bisherigen Lesefehlern ergeben. Bearbeitungskräfte werden nur noch für die Fälle benötigt, bei denen eine Eintragung als logisch falsch erkannt oder nicht automatisch bereinigbare Substitutionen zur Überprüfung ausgesondert oder von allen Lesern die gleichen Zeichen nicht erkannt wurden. Die Angestellten werden nicht mehr durch stupide Korrekturarbeiten belastet, sondern können stattdessen mit anspruchsvolleren Aufgaben betraut werden. Es können erhebliche Kosten eingespart werden. Die sog. EZÜ-Grenze (Elektronische Zahlungsüberweisung), d.h. diejenige Grenze, für welche Belege auf die vorbeschriebene Art und Weise bearbeitet werden (ab DM 500,-), kann erheblich herabgesetzt oder auf Null gesetzt werden. Das bedeutet, daß alle Belege, deren Beträge unter diesem Grenzwert liegen und die heute nur über die Kodierungszeile verarbeitet werden, ebenfalls über das vorbeschriebene Verfahren wirtschaftlich verarbeitet werden könnten, bei welchem die wesentlich umfangreicheren Informationen des Gesamtbeleges ausgewertet werden. Man kann mit den vorhandenen Arbeitsplätzen ein wesentlich größeres Volumen von Belegen bearbeiten, was durch die bisher bekannten Bearbeitungsverfahren noch nicht möglich ist.

Der Aspekt der verbesserten Erkennungssicherheit ist mindestens so hoch anzusetzen, wie der reduzierte Korrekturaufwand. Unentdeckte Substitutionen führen zu Falschbuchungen. Es hat sich bei der Testanwendung der Erfindung gezeigt, daß äußerst selten die gleichen Zeichen von unterschiedlichen Erkennungsverfahren substituiert werden, daß dies aber bei dem Einsatz von weiteren spezialisierten Erkennungsverfahren fast auszuschließen ist. Es ist deshalb auch möglich, aus Kostengründen nur für bestimmte Anwendungsfälle teure Erkennungsspezialisten für noch entdeckte Fehlerquellen nachzuschalten.

Es ist natürlich auch denkbar, daß das vorbeschriebene Verfahren nicht nur zur Erfassung und Erkennung von Zahlungsverkehrsbelegen eingesetzt wird, sondern auch in anderen Bereichen, z. B. im medizinischen Bereich für die Erfassung und Erkennung von Rezepten, bei anderen Feldinhalten wie z. B. Medikamentennummern und dgl. Weitere Einsatzgebiete sind denkbar bei der Erfassung und der Verarbeitung von Wartungsberichten, Kreditkartenbelegen , Fertigungsbelegen, Abreißbelegen (z.B. Versandhäuser, Kaufhäuser), Rückläufern von Mailingaktionen, Wahlzetteln, Antragformularen, Adressänderungsformularen und dgl.

Weitere Merkmale, Vorteile und Einzelheiten der Erfindung ergeben sich aus der nachfolgenden Beschreibung von bevorzugten Ausführungsbeispielen anhand der Zeichnung. Darin zeigen:
- Fig. 1: eine Übersichtsdarstellung des kompletten Lesesystems gemäß der Erfindung;
- Fig. 2: eine Detaildarstellung der Digitalisierungsstation zur Erfassung der elektronischen Belegabbilder;

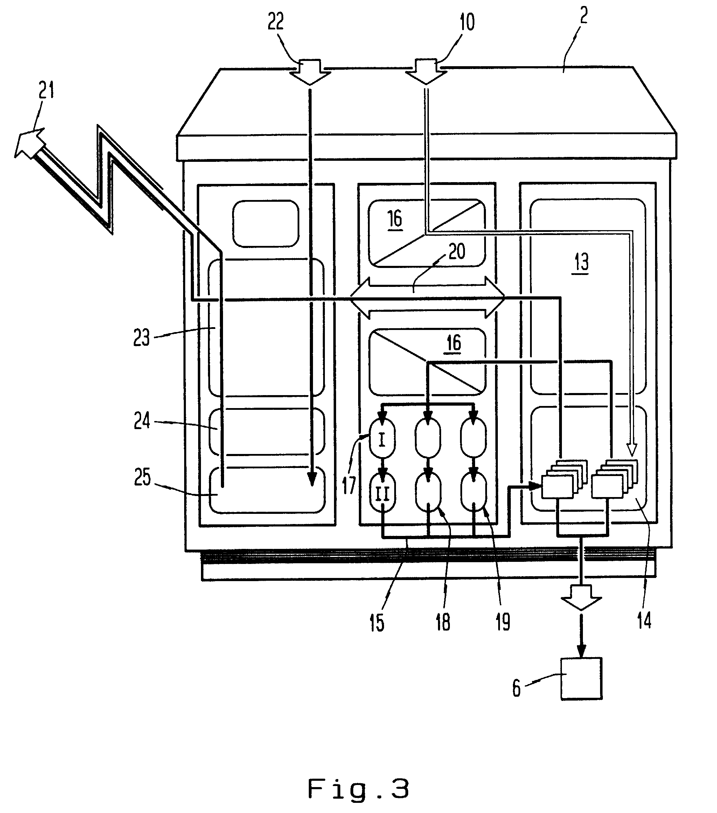

- Fig. 3: ein Bearbeitungssystem mit den Lesestationen gemäß der Erfindung;
- Fig. 4: ein schematisches Flußschaubild zur Erläuterung der Erhöhung der Erkennungsqualität, und
- Fig. 5: ein Flußschaubild zur Erläuterung der Vermeidung von Substitutionen.

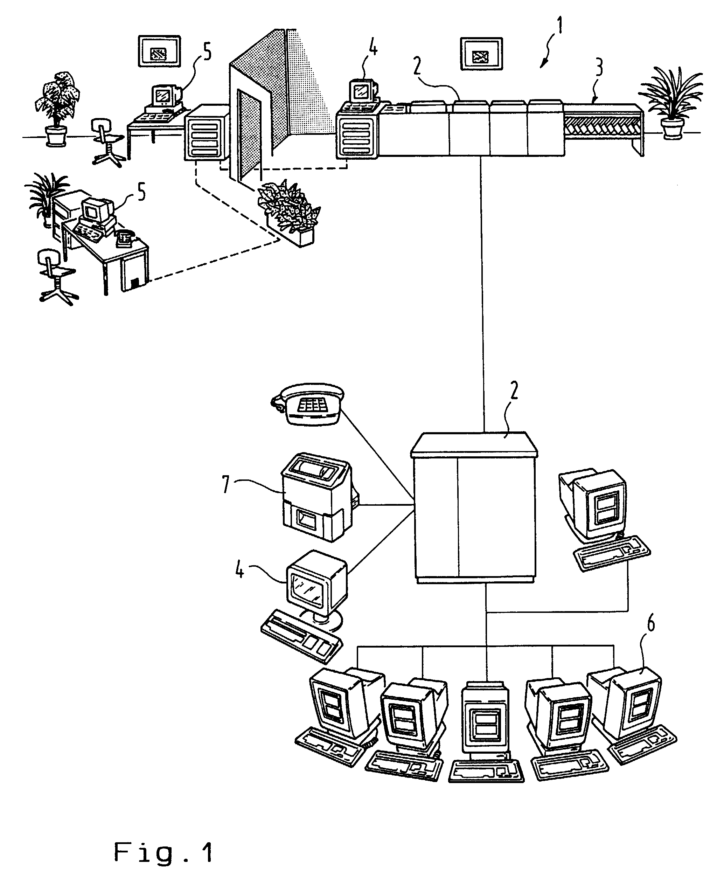

Die Übersichtsdarstellung in Fig. 1 zeigt beispielweise ein System zur Erfassung und Erkennung von Schriften auf Belegen und Formularen mit handschriftlichen Eintragungen und/oder Maschinenschriften, kurz als Lesesystem 1 bezeichnet. Dieses Lesesystem weist eine Kamera- und Interpretationsstation 2 auf, in welcher die Erfassung der elektronischen Abbildungen und Erkennung der Schriften durchgeführt wird. Dieser Station kann sich eine Sortierstation 3 für Codierzeilenbelege anschließen, in welcher die Belege entsprechend sortiert abgelegt werden. Das Lesesystem 1 ist mit Arbeitsstationen 4, 5, 6 verbunden. Die in das System 1 eingegebenen Belege werden mit einer Spezialkamera mit 10 Punkten pro Millimeter digitalisiert und ihre Daten in der Station 2 interpretiert.

An die Kamera- und Interpretationsstation 2 ist ferner eine Druckereinrichtung 7 angeschlossen.

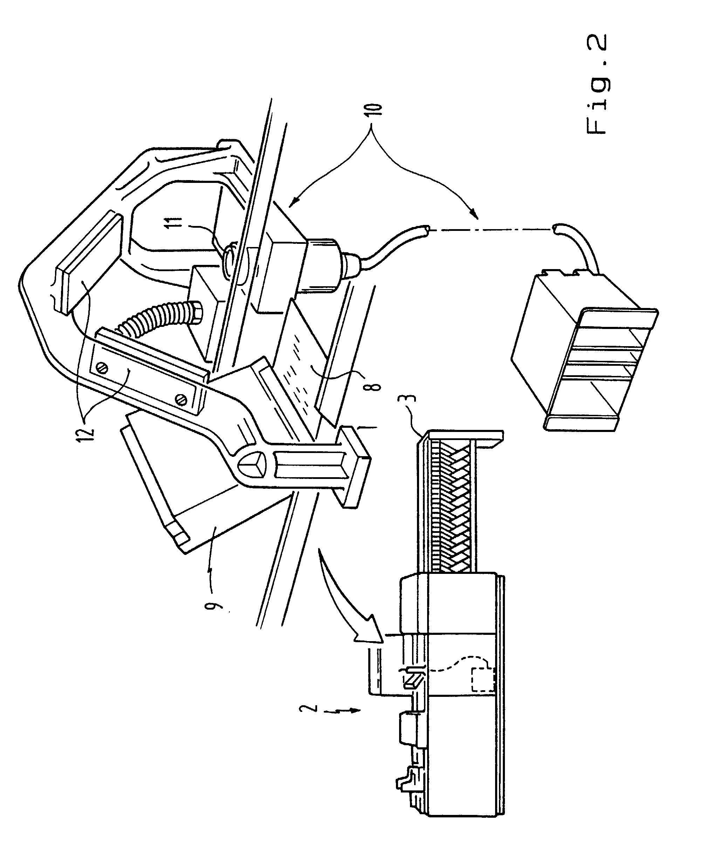

Die Fig. 2 zeigt die Digitalisierungskamera 10. Der Beleg 8 wird an einer Beleuchtungseinrichtung 9 vorbeigeleitet, wobei dies ohne Höhen- und Seitenversatz mit einer Geschwindigkeit von bis zu 4 m/sec geschieht. Die Abtastung der Belegdaten erfolgt über eine Spezialoptik 11, welcher die Belegdaten über ein Spiegelsystem 12 zugeleitet werden. Dabei werden die Daten mit einer Auflösung von 10 Punkten pro mm in beiden Richtungen mit je Punkt 256 Graustufen erfaßt. Das Kamerasystem ermöglicht eine Echtzeitanpassung von schwachem oder starkem Druck auf gleichen Schwarzwert und entsprechender Hintergrundsabstimmung, so daß die Daten im Rechner bereinigt zur Verfügung stehen.

Innerhalb der Steuerelektronik 2 werden die von der Kamera erfaßten Daten auf 10% in Echtzeit komprimiert 16. Die komprimierten Daten werden dann einem Rechner 13 zugeleitet und auf einer Magnetplatte 14 abgespeichert. Die abgespeicherten Bilddaten werden nun der eigentlichen Interpretationsstation 15 über eine Dekomprimierungsstation 16 zugeleitet. In der Interpretationsstation 15 erfolgt das Erkennen der Daten in der erfindungsgemäßen Weise. Beispielsweise sind hier drei Lesergruppen 17, 18, 19 mit jeweils zwei unterschiedlichen Erkennungsverfahren I und II dargestellt, die parallel oder hintereinander geschaltet sind. Die erkannten Zeichen werden von den Lesestationen I, II als AscII-Datensätze dem Magnetplattenspeicher 14 zugeleitet und abgespeichert. Die AscII-Daten und die Bilddaten sind über die Kontrollbildschirme 6 abrufbar. Über ein Koppelsystem 20 sind die Daten schließlich einer Datenfernübertragung 21 zuleitbar.

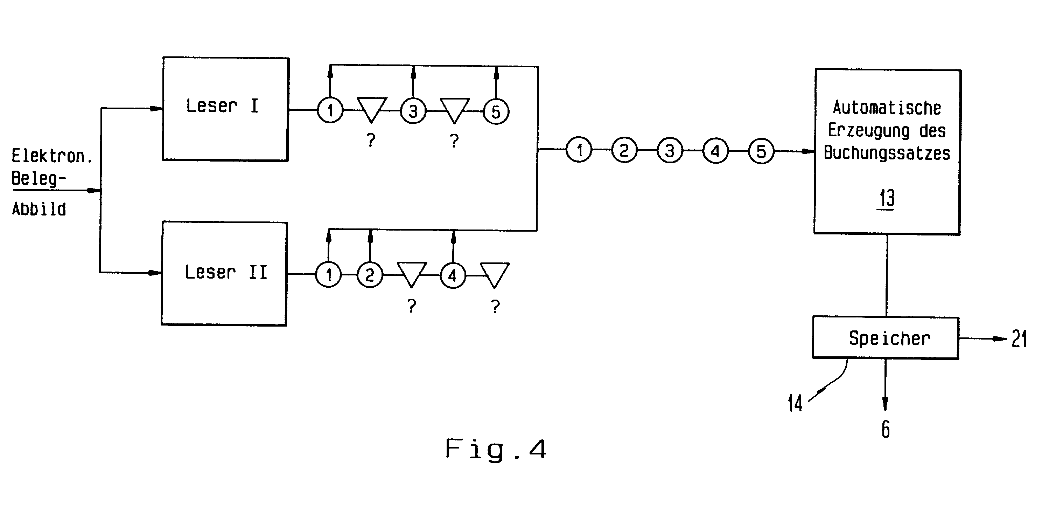

Das Flußschaubild gemäß Fig. 4 zeigt zwei parallel zueinander geschaltete Leser I, II, denen ein elektronisches Abbild des Beleges zur Interpretation zugeleitet wird. Während der Leser I aus beispielsweise einer Ziffernfolge die Ziffern 1, 3 und 5 als richtig erkennt und die Ziffern 2 und 4 nicht erkennt, erkennt der Leser II die Ziffern 1, 2 und 4 als richtig und erkennt nicht die Ziffern 3 und 5. Durch den Abgleich der erkannten Daten wird die Ziffernfolge insgesamt als richtig erkannt, und es ist keine manuelle Korrektur notwendig. Eine richtige Buchung kann erfolgen. Die Erkennungsqualität wird wesentlich verbessert.

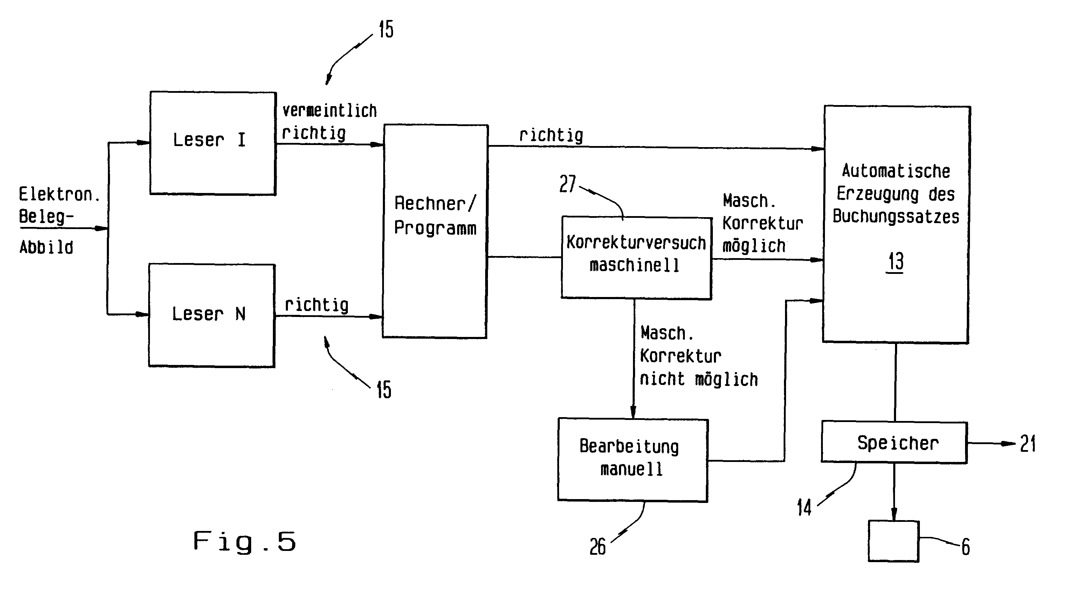

Anhand der Fig. 5 ist beispielsweise das Flußbild der Beleginterpretation in der Interpretationsstation 15 schematisch dargestellt. Die von der Kamera 10 erfaßten Belegdaten werden den Lesern I und II in Form eines elektronischen Abbildes des Beleges zugeleitet, welche eine Interpretation der Schrift mittels vorgegebener Schrifterkennungsverfahren durchführen. Bei einem Vergleich der Interpretationsergebnisse werden Diskrepanzen (Substitutionen) festgestellt, und es wird eine Überprüfung erzwungen. Diese maschinelle Überprüfung 27 führt - falls möglich - automatische Korrekturen durch, oder - falls nicht möglich - erzwingt eine manuelle Bearbeitung an der Bearbeitungsstation 26. Hierzu kann es sehr zweckmäßig sein, wenn die Erkennungsdiskrepanz auf dem in Echtzeit erfaßten Belegimage gekennzeichnet bzw. optisch hervorgehoben ist, so daß nicht der gesamte Beleg auf die Korrektheit der eingetragenen Daten überprüft werden muß. Das korrigierte Ergebnis wird einem Rechner 13 zugeleitet. Die Bearbeitungsstationen 6, 26 können identisch sein.

Nachfolgend sollen einige Beispiele für einige Auswertungsmöglichkeiten angegeben werden:
a.) 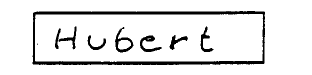
   Leser I liest: Hu6ert
   Leser II liest: Hubert

   Ein Unterschied wird festgestellt und entweder, weil 'alpha' zwischen 'alpha' wahrscheinlicher ist als 'numerisch' zwischen 'alpha', automatisch richtig gestellt oder eine automatische Wörterbuchfunktion findet "Hubert" als möglich und "Hu6ert" als nicht bekannt. In jedem Fall ist eine manuelle Korrektur nicht erforderlich und eine unentdeckte Falschlesung wird nicht weitergeleitet.
b.) 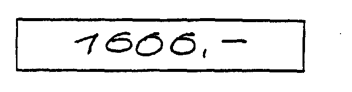
   Leser I liest: 1.060,--DM
   Leser II liest: 7.000,--DM
   Was ist richtig? (7060,--DM)

   Hier wäre mit hoher Wahrscheinlichkeit bisher eine Fehlbuchung erfolgt. Gemäß der Erfindung wird aufgrund der Erkennungsdiskrepanz eine Korrketur durch den Menschen 26 erzwungen, da eine maschinelle Korrektur 27 nicht möglich ist.
c.) Für den Fall b.) könnten auch Problemschriften für bestimmte Auftraggeber in Tabellen hinterlegt werden, die Ziffer 6 immer von Leser I und Ziffer 7 immer von Leser II gegenüber den Substitutionszeichen 0 bzw. 1 höher bewerten.
d.) 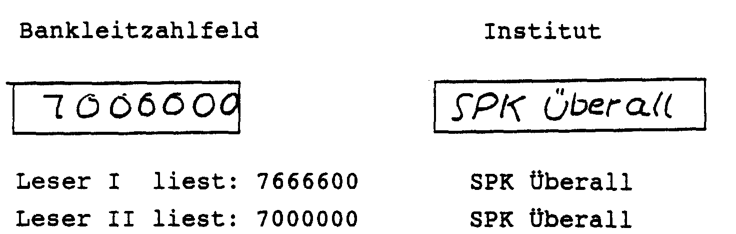
   Eine Erkennungsdiskrepanz wird festgestellt. Über die hinterlegte Tabelle ist ermittelbar, daß die Sparkasse Überall die Bankleitzahl 7 000 000 hat. Also hat Leser II richtig gelesen. Die Schreibweise läßt den Rückschluß zu, daß hier die Ziffer 0 ähnlich wie die Ziffer 6 gechrieben wird. Mit nur einer Erkennung wäre der Rückschluß nicht möglich. Also sollte zur Vermeidung einer Substitution und folgenden Fehlbuchung eine Kontrolle durch den Menschen angeboten werden, wenn bei diesem Problemkunden im Betragsfeld eine Ziffer 0 vorkommt. Es ist zu erwarten, daß der Problemkunde im Betragsfeld ähnlich schlecht geschrieben hat, und hierfür gibt es keinen automatischen Abgleich.

Die Lese- und Interpretationsstation beinhaltet auch ein OCR-Lesesystem 22, mittels welchem die Daten aus der Codierleiste in einem Rechner 23 erfaßt und auf Speichersystemen abgelegt werden können.

### Bezugszeichenliste

- 1.: Lesesystem
- 2.: Lese-, Interpretationsstation
- 3.: Sortierstation
- 4.: Systemmonitor
- 5.: Arbeitsstation für Codierzeilenbelege
- 6.: Kontrollbildschirm
- 7.: Druckereinrichtung
- 8.: Beleg
- 9.: Beleuchtungseinrichtung
- 10.: Kamerasystem mit Datenweg
- 11.: Spezialoptik
- 12.: Spiegelsystem
- 13.: Rechner
- 14.: Magnetplattenspeicher
- 15.: Interpretationsstation
- 16.: Komprimierungsstation/Dekomprimierungsstation
- 17.: Lesergruppe
- 18.: Lesergruppe
- 19.: Lesergruppe
- 20.: Koppelsystem
- 21.: Datenfernübertragung
- 22.: OCR-Leser mit Datenweg
- 23.: Rechner
- 24., 25.: Speichersystem für Codierzeilendaten
- 26.: Bearbeitungsstation manuell
- 27.: Korrekturstation maschinell

## Patentansprüche

1. Verfahren zum automatischen Erfassen einer Mehrzahl von auf einem Beleg angeordneten, insbesondere handschriftlich angebrachten Schriftzeichen, den Schrift umfassend für ein jedes der Schriftzeichen einen Vergleichsschritt durchzuführen, bei welchem,
(a) wenn wenigstens zwei Schrifterkennungsverfahren das Schriftzeichen übereinstimmend erkannt haben, das erkannte Zeichen ausgegeben wird, und,
(b) wenn eines der Schrifterkennungsverfahren das Schriftzeichen nicht erkannt hat und ein anderes der Schrifterkennungsverfahren das Schriftzeichen erkannt hat, das erkannte Zeichen ausgegeben wird,
gekennzeichnet durch folgende weitere Schritte :
(1) ein elektronisches Abbild des Belegs zu erzeugen,
(2) das Abbild wenigstens zwei Schrifterkennungsverfahren unterschiedlicher Art zu unterziehen, wobei jedes der Schrifterkennungsverfahren zur Erkennung eines jeden Schriftzeichens der Mehrzahl Schriftzeichen in dem elektronischen Abbild vorgesehen ist,
(3) wenn die Schrifterkennungsverfahren das Schriftzeichen nicht oder als verschiedene Zeichen erkennen, je nach vorliegender Erkennungssituation einen oder mehrere der folgenden Verfahrensschritte auszuführen :
(i) dieses Schriftzeichen einem weiteren Erkennungsverfahren zu unterziehen welches mehrere Schriftzeichen in Folge berücksichtigt und bei Erkennung, das erkannte Zeichen ausgibt,
(ii) das Zeichen auszugeben, welches die höhere Wahrscheinlichkeit für ein Vorkommen zwischen auf dem elektronischen Abbild benachbarten und bereits erkannten Schriftzeichen aufweist,
(iii) in Abhängigkeit von bereits erkannten Zeichen und von der Schriftart ein vorbestimmtes der Schrifterkennungsverfahren auszuwählen und das von dem ausgewählten Schrifterkennungsverfahren erkannte Zeichen auszugeben,
(iv) beim Erkennen des Schriftzeichens als verschiedene Zeichen das Zeichen auszugeben, welches zusammen mit in einem vorbestimmten ersten Bereich des elektronischen Abbilds angeordneten, diesem Schriftzeichen benachbarten und bereits erkannten Schriftzeichen einen Informationsinhalt aufweist, der mit einem Informationsinhalt von in einem von dem ersten vorbestimmten Bereich verschiedenen zweiten vorbestimmten Bereich des elektronischen Abbilds angeordneten und bereits erkannten Schriftzeichen konsistent ist, und
(4) andernfalls eine Korrektur der betroffenen Schiftzeichen durch eine Bearbeitungsperson vorzunehmen.

2. Verfahren nach Anspruch 1, **dadurch gekennzeichnet, daß** wenigstens zwei der Schrifterkennungsverfahren jeweils zur Erkennung einer vorbestimmten Schriftart optimiert werden, wobei diese Schriftarten voneinander verschieden sind.

3. Verfahren nach Anspruch 1 oder 2, **dadurch gekennzeichnet, daß** wenigstens zwei der Schrifterkennungsverfahren jeweils zur Erkennung einer in einem vorbestimmten Bereich verwendeten Schriftart optimiert werden, wobei diese vorbestimmten Bereiche voneinander verschieden sind.

4. Verfahren nach einem der Ansprüche 1 bis 3, **dadurch gekennzeichnet, daß** die Anzahl der Schrifterkennungsverfahren der Anzahl der auf dem Beleg zu verwendenden Schriftarten entspricht.

5. Verfahren nach einem der Ansprüche 1 bis 4, **dadurch gekennzeichnet, daß** das weitere Schrifterkennungsverfahren das auszugebende Zeichen mit Hilfe von Algorithmen und/oder Datenabgleich anhand von Listen oder Wörterbüchern durchführt.

6. Verfahren nach einem der Ansprüche 1 bis 5, **dadurch gekennzeichnet, daß** die Erkenntnisse der individuellen Schreibweisen eines jeweiligen Kunden in Tabellen eines in das Interpretationsverfahren integrierten Rechners hinterlegt werden.

7. Vorrichtung zum automatischen Erfassen einer Mehzahl von auf einem Beleg angeordneten, insbesondere handschriftlich angebrachten Schriftzeichen, welche dazu ausgebildet ist, alle Verfahrensschritte nach einem der Ansprüche 1 bis 6 auszuführen, **dadurch gekennzeichnet, daß** sie eine Dokumentenverarbeitungsstation aufweist, in welcher wenigstens zwei Lesestationen (I, II ... N) unterschiedlicher Schriftenerkennungsverfahren vorgesehen sind, die jedes elektronische Belegabbild durchläuft.

8. Vorrichtung nach Anspruch 7, **dadurch gekennzeichnet, daß** die Lesestationen (I, II) parallel geschaltet sind.

9. Vorrichtung nach Anspruch 7, **dadurch gekennzeichnet, daß** die Lesestationen hintereinander geschaltet sind.

10. Vorrichtung nach einem der Ansprüche 7 bis 9, **dadurch gekennzeichnet, daß** die Lesestationen für die Erkennung von Universalschrift, Hand-block- und/oder Maschinenschriften eingerichtet sind.

11. Vorrichtung nach einem der Ansprüche 7 bis 10, **dadurch gekennzeichnet, daß** die Verfahren der Lesestationen derart aufeinander abgestimmt sind, daß sie jeweils für die Erkennung einer unterschiedlichen Schriftart und/oder einzelner Bereiche innerhalb der unterschiedlichen Schriftart optimiert sind.

12. Vorrichtung nach einem der Ansprüche 7 bis 11, **dadurch gekennzeichnet, daß** wenigstens eine Korrekturstation vorgesehen ist, welche von einem softwaregesteuerten Rechner gebildet ist.

13. Vorrichtung nach einem der Ansprüche 7 bis 12, **dadurch gekennzeichnet, daß** in der maschinellen Korrekturstation (27) eine Handschrift-Buchstaben- und/oder Ziffernfolge hinterlegt ist, welche zur Erstellung von handschriftlichen Vergleichsdaten für zukünftige Vorkommnisse dient.

## Claims

1. Method for automatically acquiring a number of characters arranged on a receipt, especially characters applied by hand, comprising the step of carrying out a comparison step for each of the characters, in which
(a) if at least two script recognition methods have recognized the character and are in agreement, the character recognized is output, and
(b) if one of the script recognition methods has not recognized the character and another of the script recognition methods has recognized the character, the character recognized is output,
characterized by the following further steps:
(1) producing an electronic image of the receipt,
(2) subjecting the image to at least two script recognition methods of different types, each of the script recognition methods being provided for the purpose of recognizing each character of the number of characters in the electronic image,
(3) if the script recognition methods do not recognize the character or recognize it as different characters, carrying out one or more of the following method steps, depending on the recognition situation:
(i) subjecting this character to a further recognition method, which takes into account a number of characters in a sequence and, in the event of recognition, outputs the character recognized,
(ii) that character is output which has the higher probability of occurrence between adjacent and already recognized characters in the electronic image,
(iii) depending on characters already recognized and on the type of script, selecting a predetermined one of the script recognition methods and outputting the character recognized by the selected script recognition method,
(iv) if the character is recognized as different characters, outputting that character which, together with characters which are arranged in a predetermined first area of the electronic image, are adjacent to the former character and have already been recognized, has an information content which is consistent with an information content of characters which are arranged in a second predetermined area of the electronic image, this area being different from the first predetermined area, and have already been recognized, and
(4) otherwise, an operator performing a correction to the characters involved.

2. Method according to Claim 1, characterized in that at least two of the script recognition methods are each optimized to recognize a predetermined type of script, these types of script being different from one another.

3. Method according to Claim 1 or 2, characterized in that at least two of the script recognition methods are each optimized to recognize a predetermined type of script which is used in a predetermined area, these predetermined areas being different from one another.

4. Method according to one of Claims 1 to 3, characterized in that the number of script recognition methods corresponds to the number of types of script to be used on the receipt.

5. Method according to one of Claims 1 to 4, characterized in that the further script recognition method carries out the recognition of the character to be output with the aid of algorithms and/or data matching using lists or dictionaries.

6. Method according to one of Claims 1 to 5, characterized in that the knowledge relating to the individual writing styles of a respective customer is stored in tables in a computer integrated into the interpretation method.

7. Device for automatically acquiring a number of characters arranged on a receipt, especially characters applied by hand, the device being designed to carry out all the method steps according to one of Claims 1 to 6, characterized in that it has a document processing station in which at least two reading stations (I, II ... N) of different script recognition methods are provided, through which stations each electronic receipt image passes.

8. Device according to Claim 7, characterized in that the reading stations (I, II) are connected in parallel.

9. Device according to Claim 7, characterized in that the reading stations (I, II) are connected one after another.

10. Device according to one of Claims 7 to 9, characterized in that the reading stations are equipped for the recognition of general-purpose script, handwritten block-capital and/or machine scripts.

11. Device according to one of Claims 7 to 10, characterized in that the methods of the reading stations are co-ordinated with one another in such a way that they are each optimized for the recognition of a different type of script and/or individual areas within the different type of script.

12. Device according to one of Claims 7 to 11, characterized in that at least one correction station is provided and is formed by a software-controlled computer.

13. Device according to one of Claims 7 to 12, characterized in that a sequence of handwritten letters and/or numbers is stored in the mechanical correction station (27) and is used to establish handwriting comparison data for future events.

## Revendications

1. Procédé pour la saisie automatique d'une pluralité de signes d'écriture apposés sur un document, notamment sous la forme manuscrite, comprenant l'étape consistant à effectuer une comparaison pour chaque signe d'écriture, étape dans laquelle,
(a) lorsqu' au moins deux procédés de reconnaissance d'écriture ont reconnu le signe d'écriture de façon concordante, le signe reconnu est sorti et
(b) lorsque l'un des procédés de reconnaissance d'écriture n'a pas reconnu le signe d'écriture et qu'un autre des procédés de reconnaissance d'écriture a reconnu le signe d'écriture, le signe reconnu est sorti,
caractérisé par les autres étapes suivantes :
(1) production d'une représentation électronique du document
(2) la représentation est soumise à au moins deux procédés de reconnaissance d'écriture de types différents, chacun des procédés de reconnaissance d'écriture pour la reconnaissance de chaque type d'écriture de la pluralité de signes d'écriture étant prévu dans la représentation électronique.
(3) lorsque le procédé de reconnaissance d'écriture ne reconnaît pas le signe d'écriture ou le reconnaît comme étant un signe différent, en fonction de la situation de reconnaissance présente, on effectue une ou plusieurs des étapes opérationnelles suivantes :
(I) ce signe d'écriture est soumis à un autre procédé de reconnaissance qui prend en compte plusieurs signes d'écriture en série lors de la reconnaissance et sorti le signe reconnu
(II) sortie du signe qui présente la plus grande probabilité d'apparition entre des signes voisins sur la représentation électronique et de signes d'écriture déjà reconnus
(III) en fonction de signes déjà reconnus et du type d'écriture, on sélectionne un procédé de reconnaissance d'écriture prédéterminé et le signe reconnu par le procédé de reconnaissance d'écriture sélectionné est sorti,
(IV) lors de la reconnaissance du signe d'écriture comme étant un signe différent, sortie du signe qui conjointement avec un signe d'écriture déjà reconnu et voisin dans un premier domaine prédéterminé de la représentation électronique présentant un contenu d'informations qui est consistant avec un contenu d'informations d'un deuxième domaine prédéterminé différent du premier domaine prédéterminé de la représentation électronique, et
(V) dans le cas contraire, il est procédé à une correction du signe d'écriture concerné par un opérateur.

2. Procédé selon la revendication 1, caractérisé en ce qu'au moins deux des procédés de reconnaissance d'écriture sont optimisés chaque fois pour la reconnaissance d'un type d'écriture prédéterminé, ces types d'écriture étant différents entre eux.

3. Procédé selon la revendication 1 ou 2, caractérisé en ce qu'au moins deux des procédés de reconnaissance d'écriture sont respectivement optimisés pour la reconnaissance d'un type d'écriture utilisé dans un domaine prédéterminé, ces domaines prédéterminés étant différents entre eux.

4. Procédé selon l'une des revendications 1 à 3, caractérisé en ce que le nombre de procédés de reconnaissance d'écriture correspond au nombre de types d'écriture à utiliser sur le document.

5. Procédé selon l'une des revendications 1 à 4, caractérisé en ce que l'autre procédé de reconnaissance d'écriture exécute le signe à sortir à l'aide d'algorythmes et/ou de mise au point de données sur la base de listes ou de dictionnaires.

6. Procédé selon l'une des revendications 1 à 5, caractérisé en ce que les résultats de reconnaissance des types d'écriture individuels d'un client respectif sont déposés dans les tableaux d'un ordinateur intégré dans le procédé d'interprétation.

7. Dispositif pour la saisie automatique d'une pluralité de signes d'écriture apposés sur un document, en particulier de signes d'écriture apposés de façon manuscrite, conçu de telle sorte que toutes les étapes opérationnelles sont à effectuer selon l'une des revendications 1 à 6, caractérisé en ce qu'il comporte un poste de traitement de documents dans lequel sont prévus au moins deux postes de lecture (1, II...N) de différents procédés de reconnaissance d'écriture qui passent en revue chaque représentation de document électronique.

8. Dispositif selon la revendication 7, caractérisé en ce que les postes de lecture (1, II) sont montés en parallèle.

9. Dispositif selon la revendication 7, caractérisé en ce que les postes de lecture sont montés en série.

10. Dispositif selon l'une des revendications 7 à 9, caractérisé en ce que les postes de lecture sont agencés pour la reconnaissance d'écriture universelle, d'écriture dactylographiée et/ou caractères d'imprimerie écrits à la main.

11. Dispositif selon l'une des revendications 7 à 10, caractérisé en ce que les procédés des postes de lecture sont accordés entre eux de façon à être respectivement optimisés pour la reconnaissance d'un type d'écriture différent et/ou de différents domaines à l'intérieur du type d'écriture différent.

12. Dispositif selon l'une des revendications 7 à 11, caractérisé en ce qu'il est prévu au moins un poste de correction qui est constitué par un ordinateur commandé par un logiciel.

13. Dispositif selon l'une des revendications 7 à 12, caractérisé en ce que dans le poste de correction (27) est déposée une suite d'écritures de lettres alphabétiques manuscrites et/ou de chiffres qui sert à la préparation de données de comparaison manuscrites pour les opérations futures.
